# EUROPÄISCHE PATENTANMELDUNG

(11) **EP 1 403 618 A2**
(43) Veröffentlichungstag der Anmeldung: **31.03.2004**
(21) Anmeldenummer: 03102408.6
(22) Anmeldetag: 01.08.2003
(51) Int. Cl.: G01C 21/36

(54) **Eingabevorrichtung**

(30) Priorität: 27.09.2002 DE 10245331
(71) Anmelder: ROBERT BOSCH GMBH, 70442 Stuttgart (DE)
(72) Erfinder: Lungwitz, Thomas, 70190, Stuttgart (DE); Kossira, Martin, 71672, Marbach am Neckar (DE); Kunitz, Katja, 31188, Holle (DE); Auberg, Stefan, 70825, Korntal-Muenchingen (DE)

(57) **Zusammenfassung**

Es wird eine Eingabevorrichtung zur Eingabe eines Namens vorgeschlagen, bei der eine Eingabe eines Namens über eine Spracheingabeeinheit erst dann ermöglicht wird, wenn der Name zuvor wenigstens einmal über die Bedieneinheit manuell eingegeben worden ist.

## Beschreibung

### Stand der Technik

Die Erfindung geht aus von einer Eingabevorrichtung zur Eingabe eines Namens nach der Gattung des Hauptanspruchs. Es sind schon Eingabevorrichtungen mit einer Spracherkennung bekannt, die zum Beispiel zur Bedienung von Fahrerinformationssystemen in Kraftfahrzeugen eingesetzt werden. Insbesondere durch Fahrgeräusche wird hierbei die Eingabe von Ortsnamen zur Eingabe eines Fahrziels erschwert. Ferner muss die Bestimmung des Ortsnamens aus einer Vielzahl von Fahrzielen erfolgen. Hierdurch kann es mitunter vorkommen, dass kein Ortsname erkannt wird oder die Namenserkennung fehlerhaft ist. Insbesondere bei einer Ganzworteingabe muss ein Vergleich mit einer Vielzahl von Ortsnamen erfolgen, wodurch die Verarbeitung der Eingabe sehr aufwendig ist. Aus der DE 197 42 054 A1 ist ein Eingabesystem für Orts- oder Straßennamen bekannt, bei denen zur Verkürzung dieser Suchdauer eine Sortierung einer Liste von Namen in Abhängigkeit von der Einwohnerzahl erfolgt, so dass zunächst die Großstädte durchsucht werden, um die Eingabedauer zu verkürzen. Gleiches ist für häufig angewählte Straßennamen möglich.

### Vorteile der Erfindung

Das erfindungsgemäße Eingabeverfahren mit den Merkmalen des Hauptanspruchs hat demgegenüber den Vorteil, dass nur dann eine Spracherkennung eines Namens erfolgt, wenn dieser vorher zumindest einmal über Bedienelemente, zum Beispiel durch eine Auswahl des Ortsnamens in einer Anzeigendarstellung, durch den Benutzer ausgewählt wurde. Hierdurch wird die Menge der Namen verringert, die mittels der Spracheingabe überprüft werden müssen. Denn erfahrungsgemäß wird die Anzahl der möglichen Fahrziele relativ gering sein, so dass eine Spracherkennung beschleunigt wird. Ferner kann auch die Sicherheit der Spracheingabe erhöht werden, da möglicherweise in einer großen Gesamtheit von gespeicherten Namen von der Aussprache ähnliche Namen beieinander liegen und diese Ähnlichkeit bei jeder Spracheingabe erneut überprüft werden muss. Durch die Beschränkung auf bereits eingegebene Namen kann dieser Vergleich entfallen. Zudem wird insbesondere bei der ersten Eingabe eines Namens nochmals eine Überprüfung durch den Einzugebenden erreicht, so dass eine falsche Eingabe vermieden wird, zum Beispiel durch eine falsche Aussprache bei der ersten Eingabe.

Durch die in den Unteransprüchen aufgeführten Maßnahmen sind vorteilhafte Weiterbildungen und Verbesserungen der im Hauptanspruch angegebenen Eingabevorrichtung möglich. Besonders vorteilhaft ist, die Namen, die bereits einmal über die Bedienelemente eingegeben wurden, in einem gesonderten Namensspeicher abzulegen. Hierdurch ist ein besonders schneller Zugriff auf diese Namen möglich, so dass der Eingabevorgang weiter beschleunigt wird.

Ferner ist es vorteilhaft, ebenfalls die phonetische Transkription in dem Namensspeicher abzulegen, so dass ein eingegebenes Sprachsignal unmittelbar mit einem gespeicherten Audiosignal oder mit entsprechenden phonetischen Daten verglichen werden kann. Die phonetischen Transkriptionsdaten sind in einer Ausführungsform unabhängig von einem Benutzer gespeichert, so dass ein phonetischer Vergleich von durch unterschiedliche Benutzer eingegebenen Namen möglich ist.

Es ist ferner vorteilhaft, den Namensspeicher als einen sogenannten First-In-First-Out-Speicher vorzusehen, bei dem ein zuerst eingegebenes Element auch als erstes wieder gelöscht wird. Wird ein Name mittels Spracheingabe oder mittels Bedienelementen eingegeben, der bereits in dem Speicher abgelegt ist, wird dieser wieder an die erste Stelle des Speichers gesetzt. Kommt bei einem bereits vollständig gefiillten Speicher ein weiterer Namen hinzu, wird damit automatisch der Namen gelöscht, dessen Auswahl am längsten zurückliegt. Hierdurch stehen einem Nutzer insbesondere die zuletzt eingegebenen Namen auch bei einem begrenzten Speicherplatz zur Verfügung.

Ferner ist vorteilhaft, bei Namen, die im Hauptspeicher mehrdeutig sind, durch eine anschließende Abfrage den Benutzer auf die Mehrdeutigkeit des Namens hinzuweisen. Hierdurch wird vermieden, dass ein Benutzer den gleichen Namen eingibt, der bereits gespeichert ist, wobei jedoch ein gleicher Name mit einer anderen Zuordnung z.B. zu einer Telefonnummer oder räumlichen Koordinate in dem Gesamtspeicher abgelegt ist und der Benutzer diesen Namen eigentlich auswählen will.

Ferner ist die Erfassung der Spracheingabe als Ganzwort vorteilhaft, da hierdurch im Gegensatz zu einer buchstabeweisen Eingabe eine schnellere und einfachere Bedienung der Spracheingabeeinheit ermöglicht wird.

Insbesondere ist die Verwendung in einem Kraftfahrzeug zur Eingabe von Fahrzielen in einer Navigationsvorrichtung vorteilhaft, da sich insbesondere während der Fahrt ein Fahrer auf das Verkehrsgeschehen konzentrieren muss und die Spracheingabe es ihm ermöglicht, einfach und sicher ein Fahrziel einzugeben, selbst wenn er eine Bedieneinheit oder eine Anzeige während der Fahrt nicht beachten kann.

### Zeichnung

Ausführungsbeispiele der Erfindung sind in der Zeichnung dargestellt und in der nachfolgenden Beschreibung näher erläutert.

Es zeigen
- Figur 1: ein Ausführungsbeispiel für eine erfindungsgemäße Eingabevorrichtung,
- Figur 2: ein Verfahren zum Betrieb der erfindungsgemäßen Eingabevorrichtung.

### Beschreibung des Ausführungsbeispiels

Die erfindungsgemäße Eingabevorrichtung kann zur Eingabe eines Namens in beliebige Geräte zur Verarbeitung von Namen verwendet werden. Allgemein ist die Eingabe eines solchen Namens in Recheneinheiten möglich, zum Beispiel zur Dateienauswahl. Insbesondere ist die Benutzung der erfindungsgemäßen Eingabevorrichtung in Situationen vorteilhaft, bei denen eine manuelle Eingabe zum Beispiel über eine Tastatur nur schwer möglich ist, da der Benutzer zugleich mit anderen Aufgaben beschäftigt ist. Dies ist insbesondere bei der Steuerung von Fahrzeugen der Fall, insbesondere bei der Steuerung von Kraftfahrzeugen. Mit der erfindungsgemäßen Eingabevorrichtung kann ein Fahrer zum Beispiel über eine Namenseingabe die Auswahl einer Telefonnummer zur Herstellung einer Telefonverbindung oder die Auswahl eines Fahrziels zur Eingabe des Fahrziels in eine Navigationsvorrichtung durchführen, wobei die Navigationsvorrichtung eine Fahrtroute zu dem eingegebenen Fahrziel berechnet. Im Folgenden ist die erfindungsgemäße Eingabevorrichtung am Beispiel einer in einem Kraftfahrzeug angeordneten Fahrerinformationsvorrichtung beschrieben, die insbesondere der Fahrzeugnavigation dient.

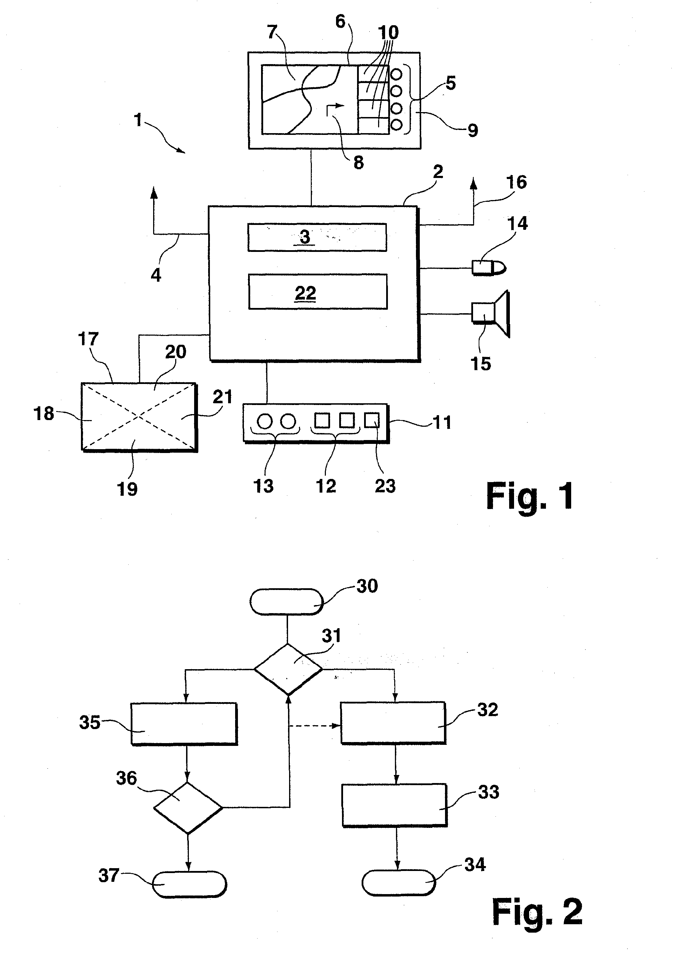

In der Figur 1 ist eine Fahrerinformationsvorrichtung 1 dargestellt, die insbesondere einer Fahrzeugführung von einer aktuellen Position zu einem eingegebenen Fahrziel dient. Die Fahrerinformationsvorrichtung 1 weist eine Navigationseinheit 2 mit einer Recheneinheit 3 auf. An die Navigationseinheit 2 ist eine Ortungseinheit 4 angeschlossen, die der Ermittlung einer aktuellen Fahrzeugposition dient, wobei die Positionsbestimmung bevorzugt über ein Satellitenortungssystem erfolgt, z.B. über das GPS (Global Positioning System). Ferner ist an die Navigationseinheit 2 eine Anzeigeeinheit 5 angeschlossen, die eine Anzeigefläche 6 aufweist, in der zum Beispiel eine Verkehrswegekarte 7 oder Fahrtrichtungshinweise 8, die auf ein Abbiegen an einer Straßenkreuzung hinweisen, darstellbar sind. Ferner sind an der Anzeigeeinheit 5 bevorzugt Bedienelemente 9, zum Beispiel in Form von Drucktasten, angeordnet, die einzelnen Anzeigebereichen 10 jeweils zugeordnet sind. An die Navigationseinheit 2 ist ferner eine Bedieneinheit 11 mit Drucktasten 12, Drehreglern 13 oder Wipptasten angeschlossen. Ferner ist die Navigationseinheit mit einem Mikrofon 14 verbunden, das der Spracheingabe dient. Zur Sprachausgabe, insbesondere zur akustischen Ausgabe von Fahrhinweisen, ist ein Lautsprecher 15 an die Navigationseinheit 2 angeschlossen. Über eine Mobilfunkschnittstelle 16 können weitere Daten an die Navigationseinheit 2 übertragen werden, zum Beispiel Verkehrsmeldungen oder ergänzende Verkehrswegedaten. Über die Ortungseinheit 4 wird eine aktuelle Position des Fahrzeugs ermittelt, in dem die Fahrerinformationsvorrichtung 1 angeordnet ist. Über die Bedienelemente 9, 11 oder über das Mikrofon 14 wird ein Fahrziel in die Navigationseinheit 2 eingegeben. Die Recheneinheit 3 bestimmt nunmehr durch Zugriff auf einen Datenspeicher 17, in dem Verkehrswegedaten, insbesondere Straßenkartendaten eines Straßennetzes, abgelegt sind, eine Fahrtroute von der aktuellen Position zu dem eingegebenen Fahrziel. Die zugehörigen Verkehrswegekarten 7 und Fahrtrichtungshinweise 8 werden in der Anzeigefläche 6 ausgegeben.

Eine erste Eingabemöglichkeit für ein von dem Fahrer gewünschtes Fahrziel besteht über die Auswahl von in den Anzeigebereichen 10 angezeigten Fahrzielen mittels der neben der Anzeigefläche 6 angeordneten Bedienelemente 9. Durch die Auswahl eines dem Anzeigebereich zugeordneten Bedienelements wird der dort angezeigte Name des Fahrziels an die Navigationseinheit 2 übermittelt. In einer weiteren Ausführungsform kann die Anzeigefläche 6 auch als eine berührungsempfindliche Anzeigefläche ausgeführt sein, so dass die Auswahl des entsprechenden Anzeigebereiches 10 bereits zur Eingabe des Fahrziels ausreicht. Eine weitere Möglichkeit der Fahrzieleingabe besteht über eine Auswahl von Ganzwörtern mittels der Bedieneinheit 11 durch einen Wechsel und eine anschließende Bestätigung eines in der Anzeigefläche 6 namentlich vollständig angezeigten Fahrziels. In einer weiteren Ausführungsform kann über die Bedienelemente 12, 13 auch eine buchstabenweise Eingabe des Fahrziels erfolgen, bis der Fahrzielname, der in dem Datenspeicher 17 abgelegt ist, eindeutig bestimmt ist. Der Datenspeicher 17 weist in einem ersten Speicherbereich 18 eine Speicherung von Namensdaten von Orten auf, die vorzugsweise zusammen mit der zugehörigen Position gespeichert sind. In einem zweiten Speicherbereich 19 ist die akustische Transkription zu dem jeweiligen Ortsnamen abgelegt. In einem dritten Speicherbereich 21 ist eine digitale Karte mit Straßendaten abgelegt, wobei die Namensdaten in dem ersten Bereich 18 jeweils Koordinaten der in dem dritten Speicherbereich 21 abgelegten Straßenkartendaten zugeordnet sind. In einem vierten Speicherbereich 20 können weitere Zusatzdaten, zum Beispiel Informationen über touristische Ziele, abgelegt sein. Der Speicher 17 ist in einer bevorzugten Ausführungsform als ein magnetischer oder optischer Datenträger ausgeführt, z.B. als eine sogenannte CD-ROM. In einer weiteren Ausführungsform kann der Speicher 17 auch in der Weise ausgeführt werden, dass mehrere Datenträger, auch für verschiedene Speicherbereiche, zur Verfiigung stehen und in entsprechenden Datenträgerlaufwerken abrufbar gelagert sind. Die Datenträger sind in einer bevorzugten Ausführungsform auf ein von dem Benutzer festgelegtes Zielgebiet beschränkt, z.B. auf Staaten oder Gebiete wie "Deutschland" oder "Alpenstraßen" oder auch auf eine Auswahl aus einem Gebiet, z.B. auf wichtige Straßen in Europa.

Wird ein Ortsname erstmals über die Bedienelemente 9, 11 manuell per Hand durch einen Benutzer in die Navigationseinheit 2 eingegeben, so wird zudem der Ortsname aus dem ersten Speicherbereich 18 und die akustischen Transkriptionsdaten aus dem zweiten Speicherbereich 19 in einen Namensspeicher 22 übertagen, der vorzugsweise als ein nicht flüchtiger Speicher ausgeführt ist und der Navigationsvorrichtung 2 zugeordnet ist. Will ein Benutzer nun ein Fahrziel über eine Spracheingabe eingeben, so betätigt er eine Starttaste 23, die der Recheneinheit 2 anzeigt, dass in den nächsten Sekunden eine Spracheingabe erfolgt. Die Starttaste 23 wird allgemein als Push-To-Talk-Taste bezeichnet. Die Recheneinheit 3 vergleicht nun das eingegebene Sprachsignal mit den akustischen Transkriptionsdaten, die jeweils Fahrzielen in dem Namensspeicher 22 zugewiesen sind. Wird der gesprochene Name erkannt, so erfolgt eine akustische und/oder optische Rückmeldung über die Anzeigeeinheit 5 und/oder den Lautsprecher 15, wobei dem Fahrer zur Bestätigung das Fahrziel, das er eingegeben hat, mitgeteilt wird. Sollte die Eingabe wider Erwarten falsch sein, hat der Fahrer nunmehr eine Möglichkeit zur Korrektur. Wird dagegen festgestellt, dass der über das Mikrofon 14 eingegebene Namen keinem gespeicherten Ortsnamen zugeordnet werden kann, so erfolgt ebenfalls über den Lautsprecher 15 und/oder die Anzeigefläche 6 ein entsprechender Hinweis an den Benutzer. Er kann entweder durch ein erneutes Drücken der Starttaste 23 die Spracheingabe wiederholen oder er muss eine erstmalige Eingabe bzw. Auswahl des Fahrziels über die Bedienelemente 9, 11 vornehmen.

Ein Verfahren zum erfindungsgemäßen Betrieb der in die Fahrerinformationsvorrichtung 1 integrierten erfindungsgemäßen Eingabevorrichtung ist in der Figur 2 dargestellt. Ausgehend von einem Initialisierungsschritt 30, zum Beispiel einem Starten des Fahrzeugs oder einem Einschalten der Fahrerinformationsvorrichtung 1, wird das Eingabeverfahren gestartet. An den Initialisierungsschritt 30 schließt sich ein erster Prüfschritt 31 an, in dem überprüft wird, ob die Starttaste 23 gedrückt worden ist. Ist dies nicht der Fall, so wird zu einem manuellen Eingabeschritt 32 verzweigt, in dem der Benutzer durch die Betätigung von manuellen Bedienelementen 9, 13 einen gewünschten Namen in die Navigationseinheit 2 eingibt. An den manuellen Eingabeschritt 32 schließt sich ein Speicherschritt 33 an, in dem der eingegebene Name an die erste Stelle in den Namensspeicher 22 gesetzt wird. Dies gilt sowohl für den Fall, dass dieser Name bereits einmal eingegeben worden ist und sich an anderer Stelle in dem Namensspeicher befindet oder erstmalig eingegeben wurde. Sollte der Name in dem Namensspeicher bereits vorhanden sein, so wird dieser an seiner bisherigen Stelle gelöscht, damit dieser Name nicht mehrfach in den Namensspeicher eingetragen ist. Anschließend wird das Eingabeverfahren in einem Endschritt 34 beendet, wobei der eingegebene Name nun von der Navigationseinheit 2 weiter verarbeitet wird.

Wird in dem ersten Prüfschritt 31 dagegen festgestellt, dass die Starttaste 23 gedrückt wird, so schließt sich ein Spracherfassungsschritt 35 an den ersten Prüfschritt 31 an. Für einen vorgegebenen Zeitraum, zum Beispiel 10 Sekunden, wird das Mikrofon 14 aktiv geschaltet und es erfolgt eine Ganzworteingabe eines Ortsnamens gesprochen durch den Benutzer. Unter einem Ortsnamen ist hierbei der Name einer Stadt zu verstehen. Ferner können auch Straßennamen oder die Bezeichnung von besonderen Objekten, zum Beispiel Restaurants, Sehenswürdigkeiten oder Öffentlichen Einrichtungen, zum Beispiel Ämter oder Veranstaltungsorte, eingegeben werden. In einem anschließenden zweiten Prüfschritt 36 werden die eingegebenen akustischen Daten mit den in dem Namensspeicher 22 abgelegten Namen verglichen. In einer ersten Ausführungsform erfolgt ein Vergleich dadurch, dass die eingegebenen akustischen Daten in Silbendaten zerlegt werden. Auch zu den Namen in dem Namensspeicher 22 sind die Abfolgen einzelner Silben jeweils abgelegt. Nun erfolgt ein Vergleich zwischen den einzelnen abgelegten Silben. Wird eine Übereinstimmung zwischen einer einem in dem Namensspeicher 22 abgelegten Namen zugeordneten Silbenabfolge und dem eingegebenen akustischen Signal ermittelt, so wird der auf diese Weise bestimmte Name als eingegebener Name festgelegt. Ferner kann auch ein direkter Vergleich eines gesprochenen, akustischen Signals mit einem dem Namen zugeordneten, gespeicherten akustischen Signal erfolgen. Die Zuordnung der phonetischen Signale kann durch die Recheneinheit 3 während des Vergleichs einem gespeicherten Namen in dem Namensspeicher 22 zugewiesen werden. In einer bevorzugten Ausführungsform sind diese phonetischen Daten jedoch bereits mit in dem Namensspeicher 22 abgelegt und den einzelnen Namen zugewiesen.

Ferner ist auch ein lernfähiges System in der Weise möglich, dass bei der ersten Eingabe eines Fahrziels über die manuellen Bedienelemente 9, 11 der Benutzer dazu aufgefordert wird, den gerade ausgewählten Namen auszusprechen, so dass das von dem Fahrer ausgesprochene Signal zusammen mit dem ausgewählten Namen in dem Namensspeicher 22 abgelegt wird. Hierdurch ist ein auf den jeweiligen Nutzer zugeschnittener Vergleich eines gespeicherten akustischen Signals mit dem ausgesprochenen akustischen Signal möglich.

Gelingt es in dem zweiten Prüfschritt 36 nicht, das eingegebene akustische Signal zuzuordnen, so wird zu dem ersten Prüfschritt 31 zurückverzweigt. Der Benutzer hat nun die Wahl, entweder erneut eine Spracheingabe zu versuchen oder, wie es gestrichelt angedeutet ist, unmittelbar eine manuelle Eingabe über die Bedienelemente 9, 11 des von ihm gewünschten Namens vorzusehen. Wird dagegen in dem zweiten Prüfungsschritt 36 der eingegebene Name bestimmt, so wird ebenfalls zu einem Endschritt 37 verzweigt, wobei eine weitere Verarbeitung des eingegebenen Namens durch die Navigationseinheit 2 erfolgt.

Stellt die Navigationseinrichtung 2 ausgehend von dem Endschritt 37 fest, dass der eingegebene Name auch auf andere, in dem ersten Speicherbereich 18 abgelegte Namen zutrifft, so erfolgt in einer bevorzugten Ausführungsform eine in dem Verfahrensablauf der Figur 2 nicht dargestellte, nachfolgende Abfrage dahingehend, welcher dieser mehrdeutigen Namen nun ausgewählt werden soll. Dies können zum Beispiel Städte oder Straßen mit gleichem Namen sein. Hierbei erfolgt in einer bevorzugten Ausführungsform eine Information des Benutzers über den Lautsprecher 15, dass möglicherweise noch weitere Einträge zu dem gewählten Namen existieren. Der Benutzer kann nun die Eingabe in der Weise abbrechen, dass er manuell aus der Anzeige 6 den entsprechenden, von ihm gewünschten Namen auswählt, zum Beispiel Neustadt (Schwarzwald) oder Neustadt (Holstein) oder keine Handlung vornimmt, wobei in diesem Fall die Navigationseinheit den in dem Namnesspeicher (22) gespeicherten Ortsnamen und dessen zugehörige Koordinaten für die weitere Bearbeitung und die Durchführung der Fahrzeugnavigation verwendet.

Bei der Eingabe von Fahrzielen reicht in der Regel die Angabe nur eines Ortsnamens für eine eindeutige Angabe des Fahrziels nicht aus. Daher kann es erforderlich sein, für die Eingabe eines Fahrziels in die Navigationseinheit 2 das anhand der Figur 2 erläuterte und mittels der erfindungsgemäßen Eingabevorrichtung durchgeführte Verfahren für verschiedene Kriterien eines Fahrziels, zum Beispiel Land, Stadt oder Straße, mehrfach hintereinander durchzuführen. Eine Speicherung von Namensdaten kann dabei in der Weise erfolgen, dass zum Beispiel der Stadtname in den Namensspeicher 22 abgelegt ist, während die Eingabe des nachfolgenden Straßennamens manuell von dem Benutzer durchgeführt werden muss, da er diese Straße erstmalig als sein Fahrziel auswählt.

## Patentansprüche

1. Eingabevorrichtung zur Eingabe eines Namens, mit einer Bedieneinheit zur Eingabe des Namens über manuelle Bedienelemente (9,11), mit einer Spracheingabeeinheit (3, 14) zur Eingabe des Namens über eine Spracheingabe, **dadurch gekennzeichnet, dass** ein Eingeben eines Namens über die Spracheingabeeinheit erst dann ermöglicht wird, wenn der Name wenigstens einmal zuvor über die Bedieneinheit (9, 11) eingegeben wurde.

2. Eingabevorrichtung nach Anspruch 1, **gekennzeichnet durch** einen Namensspeicher (22) zum Ablegen von über die Bedienelemente (9, 11) eingegebenen Namen.

3. Eingabevorrichtung nach Anspruch 2, **dadurch gekennzeichnet, dass** in dem Namensspeicher (22) mit dem Ablegen des Namens die phonetische Transkription gespeichert wird.

4. Eingabevorrichtung nach einem der Ansprüche 2-3, **dadurch gekennzeichnet, dass** der Namensspeicher (22) ein First-In-First-Out Speicher ist und dass jeder aus dem Namnesspeicher (22) ausgewählte Name wieder als erstes Element neu in den Namensspeicher (22) geschrieben wird sowie an seiner bisherigen Position in dem Speicher gelöscht wird.

5. Eingabevorrichtung nach einem der vorherigen Ansprüche, **dadurch gekennzeichnet, dass** durch die Bedieneinheit (9, 11) bei einem eingegebenen, mehrdeutigen Namen eine Zuordnung des mehrdeutigen Namens im Anschluss an die Spracheingabe auswählbar ist.

6. Eingabevorrichtung nach einem der vorherigen Ansprüche, **gekennzeichnet durch** eine Speichereinheit (17) mit einer Gesamtnamensliste, von der aus die Namen dem Namensspeicher (22) zuordbar sind.

7. Eingabevorrichtung nach einem der vorherigen Ansprüche, **dadurch gekennzeichnet, dass** die Namen durch die Spracheingabeeinheit (3, 14) als Ganzworte erfassbar sind.

8. Eingabevorrichtung nach einem der vorherigen Ansprüche, **dadurch gekennzeichnet, dass** die Eingabevorrichtung (9, 11) mit einer Navigationsvorrichtung (2) zur Fahrzieleingabe verbindbar ist und dass die Namen Ortsnamen sind.
